# EUROPEAN PATENT SPECIFICATION

(11) **EP 0 994 291 B1**
(45) Date of publication and mention of the grant of the patent: **20.02.2008**
(21) Application number: 99119122.2
(22) Date of filing: 04.10.1999
(51) Int. Cl.: F17C 13/02, F17C 13/12, G05D 16/06, F17C 13/04

(54) **Two-stage pressure regulator with dual safety system, particularly for liquefied-gas cylinders**
Zweistufen-Druckregler mit Doppelsicherheitssystem insbesondere für Flüssiggasbehälter
Régulateur de pression à deux étages avec système de sécurité double plus particulierement pour bouteilles de gaz liquéfié

(30) Priority: 12.10.1998 IT MI982185
(43) Date of publication of application: 19.04.2000
(73) Proprietor: Cavagna Group S.p.A., 25010 Ponte S. Marco di Calcinato (Prov. of Brescia) (IT)
(72) Inventor: Angela Pagani, 25010 Calcinato (BR) (IT)
(74) Representative: Modiano, Micaela Nadia

(56) References cited:
- EP-A- 0 296 282
- EP-A- 0 333 968
- EP-A- 0 581 718
- GB-A- 2 027 852
- GB-A- 2 147 382

## Description

The present invention relates to a two-stage pressure regulator with dual safety system, particularly for liquefied-gas cylinders.

It is known that two-stage pressure regulators provided with quick coupling means for connection to the cylinder outlet valve are already in use on liquefied-gas cylinders.

Currently, the problem suffered by these two-stage regulators is that it is possible to couple the regulator to the cylinder while keeping the pin for actuating the outlet valve in the actuated position, i.e., in the position in which the valve is open; accordingly, an undesirable emission of gas into the environment can occur during coupling.

Another problem consists in that the pin actuation means are constituted by a lever which is provided in the upper part of the pressure regulator, so that it is necessary to provide a complicated structure in order to allow the adjustment pin to pass through the body of the pressure regulator.

EP-A-296 282 discloses a gas pressure regulator with self-latching pivoted double hooks controlled by a movable skirt ring for automatically gripping a flange of a self-closing valve of a gas cylinder. A vertical plunger actuates a pin of the valve, by means of an eccentric spindle engaging the plunger and provided with a gap inside which a projection of the skirt ring may rise when the eccentric spindle is in a position causing disengagement of the plunger with the pin of the valve.

The aim of the invention is to eliminate the above drawbacks by providing a two-stage pressure regulator with dual safety system, particularly for liquefied-gas cylinders, which allows to achieve extreme safety both by preventing the emission of gas during coupling and by preventing the escape of gas if the hose for connection to the user disconnects from the regulator for any reason.

Within the scope of this aim, a particular object of the invention is to provide a pressure regulator which allows to perform actuation very rapidly and easily without resorting to complicated structural elements.

Another object of the present invention is to provide a two-stage pressure regulator which, thanks to its particular constructive characteristics, is capable of giving the greatest assurances of reliability and safety in use.

Another object of the present invention is to provide a two-stage pressure regulator with dual safety system which can be easily manufactured starting from commonly commercially available elements and materials and is also competitive from a merely economical point of view.

In accordance with the invention, there is provided a two-stage pressure regulator with dual safety system, particularly for liquefied-gas cylinders, as defined in the appended claims.

Further characteristics and advantages will become apparent from the description of a preferred but not exclusive embodiment of a two-stage pressure regulator with dual safety system, particularly for liquefied-gas cylinders, illustrated only by way of non-limitative example in the accompanying drawings, wherein:

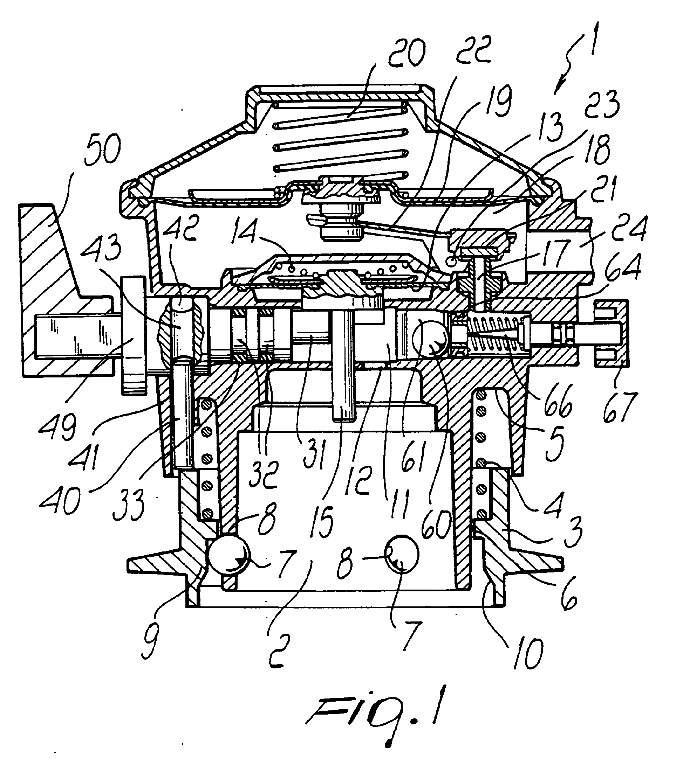

Figure 1 is a sectional view of a two-stage pressure regulator with dual safety system, according to the invention, with the actuation pin in the raised position, i.e., in the position in which the outlet valve is not open;

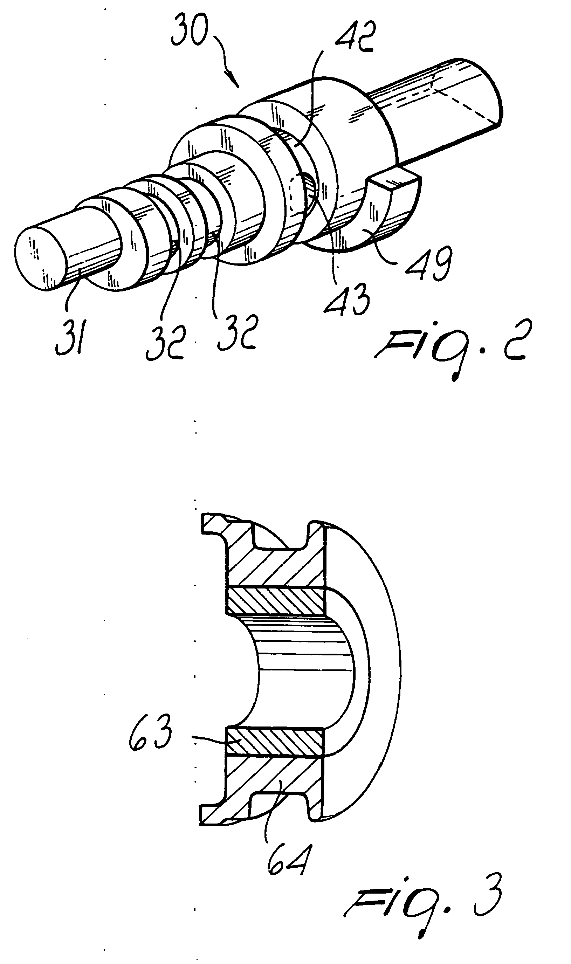

Figure 2 is a schematic perspective view of the actuation element of the two-stage pressure regulator;
Figure 3 is a view of the sealing seat of safety means against large gas leaks.

With reference to the above Figures, the two-stage pressure regulator with dual safety system, particularly for liquefied-gas cylinders, according to the invention, comprises a body, generally designated by the reference numeral 1, which is provided with means for removable coupling to a liquefied-gas cylinder.

The removable coupling means are constituted by a lower skirt 2 which can be coupled externally with respect to the outlet valve, not shown in the drawings, and around which there is an actuation collar 3 which is movable axially with respect to the skirt 2 in contrast with, and thanks to the action of, elastic means 4 which act between a recess 5 of the body 1 and a raised portion 6 formed internally by the collar 3.

Locking is provided by means of balls 7 which are accommodated in holes 8 formed by the skirt and are adapted to be pushed radially by a radial protrusion 9 formed by the collar 3 in order to make the balls 7 engage the usual groove provided on the outside of the outlet valve.

A flared portion 10 is provided so as to be axially adjacent to the radial protrusion 9 and can accommodate the balls 7 for coupling and uncoupling with respect to the outlet valve; the flared portion 10 is arranged at the balls 7 by virtue of a translatory motion in contrast with the spring 4.

The body 1 defines internally a first stage 11 which is connected, by means of the hole 12, to the region affected by the outlet valve and is delimited, in an upward region, by a first membrane 13 which is pushed by first elastic means 14 and is connected to an actuation pin 15 which is adapted to interact with the outlet valve in order to open it.

The first stage 11 is connected, as will become apparent hereinafter, to an opening 17 which leads into a second stage 18 controlled by a second membrane 19 which is pushed by second elastic means 20; the opening 17 is controlled by a flow control element 21 which is fitted at the end of a lever 22 which is pivoted at 23, in a median portion thereof, and interacts with the membrane 19 at its free end.

The second stage 18 is connected to a delivery duct designated by the reference numeral 24.

The particularity of the invention consists in that an actuation element, generally designated by the reference numeral 30, interacts with the pin 15; said actuation element is constituted by a shaft which has, at its internal end, an eccentric element 31 which is adapted to interact with the actuation pin 15 in order to keep it raised when it has to be in the deactivated position and disengage from it to allow its descent and the consequent actuation of the outlet valve.

Grooves 32 are provided in the shaft of the actuation element 30 and accommodate sealing O-rings 33.

Means for the removable locking of the coupling means, and particularly of the collar 3, engage the shaft in order to prevent the coupling and uncoupling of the body 1 with respect to the cylinder when the actuation pin 15 is in the position in which the outlet valve is open.

Said removable locking means are constituted by a rod 40 which is slideable in a seat 41 which is delimited by the body 1 and engages the upper edge of the collar 3 by means of its lower end and a recess 42 formed by the shaft 30 by means of its upper end.

A radial hole 43 is provided in the recess 42 and allows the insertion of the rod 40 and accordingly the axial translatory motion of the collar 3 to provide coupling and uncoupling when the eccentric element 31 is in the position for deactivating the actuation pin.

By turning the shaft 30 by means of the external knob 50, the eccentric element 31 disengages from the pin 15 and accordingly allows it to descend in order to open the valve and the through hole 43 disengages from the region affected by the stroke of the rod 40, accordingly preventing the actuation of the collar 3, which cannot perform the axial stroke that allows its actuation.

A spherical sealing element 60 is provided on the portion connecting the first stage 11 and the opening 17 and is provided loose inside the connecting duct 61; in case of an excessive flow of gas, it jams hermetically against a gasket 63 which is accommodated in a bush 64 which is fixed in the channel.

There is also a reset needle 66 which is connected to an external pushbutton 67 for disengaging the ball 60 from the seat of the gasket 63.

For the sake of completeness in description, it is also noted that the shaft 30 has, in the portion that lies outside the body, a protruding sector 49 which acts as an element for limiting the rotation of the shaft.

During practical operation, when it is necessary to couple or uncouple the regulator with respect to the cylinder, it is necessary to turn the shaft 30 so that the through hole 42 is located at the rod 40, which is movable under the thrust of the collar 3 which provides the coupling or uncoupling of the cylinder; in these conditions, the eccentric element 31 keeps the actuation pin 15 in the deactivation position.

Once coupling has been performed, it is possible to turn the eccentric shaft 30 so that the actuation pin 15 is moved so as to engage the outlet valve, performing the opening action.

From the above description it is evident that the invention achieves the intended aim and objects, and in particular the fact is stressed that a two-stage pressure regulator with dual safety is provided in which the actuation element constituted by the shaft 30 can be accessed laterally with respect to the body, simplifying both the handling and the use of the regulator as well as its manufacture, the construction of the cover of the body 1 being considerably simplified because it does not have to be provided with passage holes for the actuation element.

Another important aspect also consists in that an additional safety element, constituted by the spherical sealing element, is integrated in a two-stage pressure regulator, and if the duct for connection to the user becomes uncoupled, said safety element instantaneously blocks the flow of gas.

The invention thus conceived is susceptible of numerous modifications and variations, all of which are within the scope of the inventive concept.

All the details may furthermore be replaced with other technically equivalent elements.

In practice, the materials used, as well as the contingent shapes and dimensions, may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A two-stage pressure regulator with dual safety system, particularly for liquefied-gas cylinders, comprising:
a body (1) which is provided with means (2-10) for removable coupling to a liquefied-gas cylinder and defines a first control stage (11) and a second control stage (18) for limiting and regulating the pressure of the gas in output;
a pin (15) for actuating the outlet valve of said cylinder, said pin (15) being controlled by an actuation element (30) which is actuatable by actuation means (50) which can be accessed from outside said body (1);
means (40,41) for the removable locking of said coupling means (2-10) which are adapted to prevent the uncoupling and coupling of said body (1) with respect to said cylinder while said actuation pin (15) is in the position for opening said outlet valve;
blocking valve means (60-64) which are interposed, inside said body (1), between said first stage (11) and said second stage (18) to prevent considerable leakage of gas, said blocking valve means comprising a spherical sealing element (60) which can move freely inside a duct (61) for connection between said first stage (11) and said second stage (18), said spherical sealing element (60) being adapted to engage, when an excessive flow of gas occurs, against a gasket (63) accommodated in a bush (64) inserted in said duct (61); and
means for resetting said blocking valve means which are constituted by a needle (66) which is connected to a pushbutton (64) located externally with respect to said body (1) and is adapted to uncouple said spherical sealing element (60) from said gasket (63).

2. The two-stage pressure regulator according to claim 1, **characterized in that** said actuation element (30) can be accessed laterally to said body (1).

3. The two-stage pressure regulator according to claim 1, **characterized in that** said actuation element comprises a shaft (30) which has, at the end located inside said body, an eccentric element (31) which is adapted to interact with said actuation pin (15).

4. The two-stage pressure regulator according to claim 3, **characterized in that** said means for the removable locking of the coupling means comprise a rod (40) which is slideable in a seat (41) formed by said body (I) and engages the upper edge of a collar (3) which forms said removable coupling means, said rod (40) being removably insertable in a through hole (43) formed in said shaft (30), when said shaft (30) is arranged in the position in which said eccentric element (31) retains said actuation pin (15) in the position in which said outlet valve is not actuated.

## Patentansprüche

1. Ein Zweistufen-Druckregler mit Doppelsicherheitssystem, insbesondere für Flüssiggasbehälter, umfassend:
einen Körper (1), der mit Mitteln (2-10) zur lösbaren Kopplung an einen Flüssiggasbehälter bereitgestellt ist und eine erste Steuerstufe (11) und eine zweite Steuerstufe (18) zum Begrenzen und Regulieren des Drucks des Gases am Ausgang definiert;
einen Stift (15) zum Betätigen des Auslaßventils des Behälters, wobei der Stift (15) von einem Betätigungselement (30) gesteuert ist, das von Betätigungsmitteln (50) betätigbar ist, die von der Außenseite des Körpers (1) erreicht werden können;
Mittel (40, 41) zur lösbaren Blockierung der Koppelmittel (2-10), die angepasst sind, um das Loslösen und das Ankoppeln des Körpers (1) in Bezug auf den Behälter zu verhindern, solange der Betätigungsstift (15) in der Position zum Öffnen des Auslaßventils ist;
Sperrventilmittel (60-64), die innerhalb des Körpers (1) zwischen der ersten Steuerstufe (11) und der zweiten Steuerstufe (18) eingefügt sind, um ein beträchtliches Entweichen von Gas zu vermeiden, die Sperrventilmittel ein kugelförmiges Dichtungselement (60) umfassend, das innerhalb eines Kanals (61) zur Verbindung zwischen der ersten Stufe (11) und der zweiten Stufe (18) frei beweglich ist, wobei das kugelförmige Dichtungselement (60) angepasst ist, um an eine Dichtung (63), die in einer in den Kanal (61) eingefügten Buchse (64) untergebracht ist, anzugreifen, wenn ein überhöhter Gasfluss auftritt; und
Mittel zum Zurücksetzen der Sperrventilmittel, die von einer Nadel (66) gebildet sind, die mit einem in Bezug auf den Körper (1) extern angeordneten Druckknopf (64) verbunden ist und zum Loslösen des kugelförmigen Dichtungselements (60) von der Dichtung (63) angepasst ist.

2. Der Zweistufen-Druckregler gemäß Anspruch 1, **dadurch gekennzeichnet, dass** das Betätigungselement (30) seitlich zum Körper (1) erreicht werden kann.

3. Der Zweistufen-Druckregler gemäß Anspruch 1, **dadurch gekennzeichnet, dass** das Betätigungselement eine Welle (30) umfasst, die an dem innerhalb des Körpers angeordneten Ende ein Exzenterelement (31) aufweist, das angepasst ist, um mit dem Betätigungsstift (15) zusammenzuwirken.

4. Der Zweistufen-Druckregler gemäß Anspruch 3, **dadurch gekennzeichnet, dass** die Mittel zur lösbaren Blockierung der Koppelmittel eine Stange (40) umfassen, die in einem am Körper ausgebildeten Sitz (41) verschiebbar ist und den oberen Rand eines die lösbaren Koppelmittel bildenden Stellringes (3) angreift, wobei die Stange (40) lösbar in eine in der Welle (30) ausgebildeten Durchgangsbohrung (43) einsetzbar ist, wenn die Welle (30) in der Position angeordnet ist, in der das Exzenterelement (31) den Betätigungsstift (15) in der Position festhält, in der das Auslaßventil nicht betätigt ist.

## Revendications

1. Régulateur de pression à deux étages avec système de sécurité double, en particulier pour bouteilles de gaz liquéfié, comprenant:
un corps (1) qui est muni de moyens (2-10) pour le couplage amovible à une bouteille de gaz liquéfié et qui définit un premier étage de contrôle (11) et un deuxième étage de contrôle (18) pour la limitation et la régulation du gaz liquéfié en sortie;
une goupille (15) pour l'actionnement de la valve de sortie de ladite bouteille, ladite goupille (15) étant commandée par un élément d'actionnement (30) qui peut être actionné par des moyens d'actionnement (50) qui sont accessibles depuis l'extérieur dudit corps (1);
des moyens (40, 41) pour la fermeture amovible desdits moyens de couplage (2-10) qui sont adaptés pour prévenir le découplage et le couplage dudit corps (1) par rapport à ladite bouteille tandis que ladite goupille d'actionnement (15) est dans la position d'ouverture de ladite valve de sortie;
des moyens de blocage de valve (60-64) qui sont interposés, à l'intérieur dudit corps (1), entre ledit premier étage (11) et ledit deuxième étage (18) pour prévenir des pertes considérables de gaz, lesdits moyens de blocage de valve comprenant un élément d'étanchéité sphérique (60) qui peut se déplacer librement à l'intérieur d'un conduit (61) pour la liaison entre ledit premier étage (11) et ledit deuxième étage (18), ledit élément d'étanchéité sphérique (60) étant adapté pour venir en prise, lorsque survient un flux excessif de gaz, contre un joint (63) logé dans une douille (64) insérée dans ledit conduit (61); et
des moyens de remise à zéro desdits moyens de blocage de valve qui sont constitués par une aiguille (66) reliée à un bouton poussoir (64) situé extérieurement par rapport audit corps (1) et qui est adaptée pour découpler ledit élément d'étanchéité sphérique (60) dudit joint (63).

2. Régulateur de pression à deux étages selon la revendication 1, **caractérisé en ce que** ledit élément d'actionnement (30) est accessible latéralement audit corps (1).

3. Régulateur de pression à deux étages selon la revendication 1, **caractérisé en ce que** ledit élément d'actionnement comprend un arbre (30) qui présente, au niveau de l'extrémité située à l'intérieur dudit corps (1), un élément excentrique (31) qui est adapté pour interagir avec ladite goupille d'actionnement (15).

4. Régulateur de pression à deux étages selon la revendication 3, **caractérisé en ce que** lesdits moyens pour la fermeture amovible des moyens de couplage comprennent une tige (40) qui peut coulisser dans un siège (41) formé par ledit corps (1) et qui vient en prise avec le bord supérieur d'un collier (3) qui forme lesdits moyens de couplage amovibles, ladite tige (40) étant insérable de façon amovible dans un trou traversant (43) formé dans ledit arbre (30), lorsque ledit arbre (30) est agencé dans la position dans laquelle ledit élément excentrique (31) retient ladite goupille d'actionnement (15) dans la position dans laquelle ladite valve de sortie n'est pas actionnée.
